# EUROPEAN PATENT APPLICATION

(11) **EP 3 431 722 A1**
(43) Date of publication of application: **23.01.2019**
(21) Application number: 17766146.9
(22) Date of filing: 09.02.2017
(51) Int. Cl.: F01K 9/00, F01K 23/10, F01K 25/10, F01N 5/02, F02G 5/04

(54) **COGENERATION DEVICE**

(30) Priority: 18.03.2016 JP 2016056065
(71) Applicant: Panasonic Corporation, Osaka 571-8501 (JP)
(72) Inventor: KIDO, Osao, Chuo-ku, Osaka-shi Osaka 540-6207 (JP); NISHIWAKI, Fumitoshi, Chuo-ku, Osaka-shi Osaka 540-6207 (JP); KOMORI, Kou, Chuo-ku, Osaka-shi Osaka 540-6207 (JP); SHIRAI, Yoshikazu, Tokyo 105-8527 (JP); YAMAGISHI, Tetsu, Tokyo 105-8527 (JP); TAKEYA, Ryo, Tokyo 105-8527 (JP)
(74) Representative: Eisenführ Speiser
(86) International application number: PCT/JP2017/004756
(87) International publication number: WO 2017/159138

(57) **Abstract**

A cogeneration system (10a) of the present disclosure includes an internal combustion engine (21), a first power generator (22), a first coolant circuit (23), a first heat exchanger (24), a second coolant circuit (25), a Rankine cycle power generation apparatus (26), and an exhaust gas supply path (40). The Rankine cycle power generation apparatus (26) includes a pump (27), an evaporator (28), an expander (29), a second power generator (30), and a condenser (31). The evaporator (28) heats and evaporates a working fluid with exhaust gas from the internal combustion engine (21). The exhaust gas supply path (40) delivers the exhaust gas from the internal combustion engine (21) to the evaporator (28) without allowing the exhaust gas to exchange heat with a liquid. The condenser (31) has a flow path (31a) through which the first coolant flows and which forms a part of the first coolant circuit (23).

## Description

### TECHNICAL FIELD

The present disclosure relates to a cogeneration system.

### BACKGROUND ART

Techniques for generating electricity using exhaust gas from an internal combustion engine are conventionally known.

For example, Patent Literature 1 describes a power generation system 300 as shown in FIG. 6. The power generation system 300 includes an internal combustion engine 301, power generator 302, heat exchanger 303, absorption chiller-heater 304, condenser 305, evaporator 306, pump 307, turbine 308, power generator 309, and pump 310. The condenser 305, evaporator 306, pump 307, and turbine 308 compose a Rankine cycle. Exhaust gas 1a at about 500°C discharged from the internal combustion engine 301 becomes a middle-temperature heat source 4b at about 150°C after a part of the thermal energy of the exhaust gas 1a is used in the chiller-heater 304. The middle-temperature heat source 4b is delivered to the evaporator 306 and then emitted into the air. The heat exchanger 303 is a heat exchanger used in applications such as hot-water supply. Cooling water 1b from the internal combustion engine 301 exchanges heat in the heat exchanger 303 to become a low-temperature heat source 3b at about 65°C. The low-temperature heat source 3b is supplied to the condenser 305 by the pump 310, absorbs, in the condenser 305, condensation heat of a working fluid of the Rankine cycle, and then is used in the internal combustion engine 301 to cool the internal combustion engine 301. The difference between the temperature of the middle-temperature heat source 4b, 150°C, and that of the low-temperature heat source 3b, 65°C, drives the turbine 308. Energy resulting from this temperature difference is converted to electrical energy by the power generator 309.

### CITATION LIST

### Patent Literature

Patent Literature 1: JP H02(1990)-031764 B2

### SUMMARY OF THE INVENTION

### Technical Problem

The technique described in Patent Literature 1 leaves room for improvement in terms of increasing the amount of generated electricity. Therefore, the present disclosure provides a cogeneration system advantageous in increasing the amount of generated electricity.

### Solution to Problem

The present disclosure provides a cogeneration system including:
an internal combustion engine;
a first power generator driven by the internal combustion engine;
a first coolant circuit including a cooler that cools the internal combustion engine with a first coolant;
a first heat exchanger including a part of the first coolant circuit to cool the first coolant with a second coolant;
a second coolant circuit including a flow path through which the second coolant flows and which is formed in the first heat exchanger;
a Rankine cycle power generation apparatus including a pump that pumps a working fluid, an evaporator that heats and evaporates the working fluid pumped by the pump with exhaust gas from the internal combustion engine, an expander driven by expansion of the working fluid evaporated in the evaporator, a second power generator coupled to and driven by the expander, and a condenser that cools and condenses the working fluid expanded in the expander with the first coolant or the second coolant; and
an exhaust gas supply path that delivers the exhaust gas discharged from the internal combustion engine to the evaporator without allowing the exhaust gas to exchange heat with a liquid, wherein
the condenser has a flow path through which the first coolant flows and which forms a part of the first coolant circuit or a flow path through which the second coolant flows and which forms a part of the second coolant circuit.

### Advantageous Effects of Invention

The above cogeneration system is advantageous in increasing the amount of generated electricity.

### BRIEF DESCRIPTION OF DRAWINGS

FIG. 1 is a configuration diagram showing a cogeneration system according to a first embodiment.
FIG. 2 is a configuration diagram showing a cogeneration system according to a second embodiment.
FIG. 3 is a configuration diagram showing a cogeneration system according to a third embodiment.
FIG. 4 is a configuration diagram showing a cogeneration system according to a fourth embodiment.
FIG. 5 is a configuration diagram showing a cogeneration system according to a fifth embodiment.

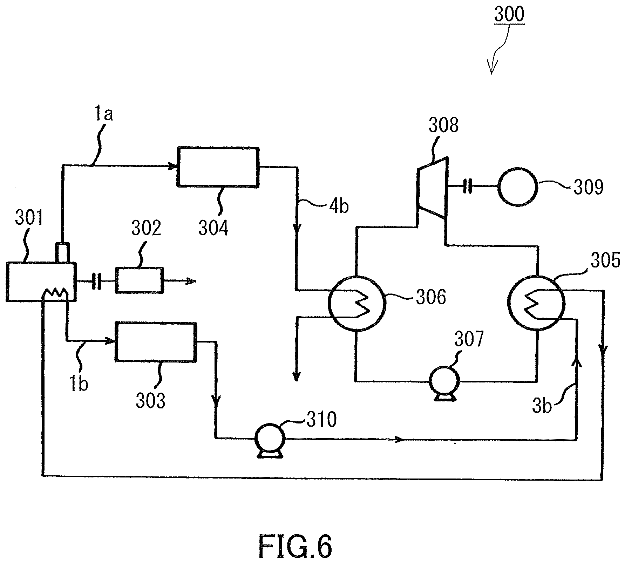

FIG. 6 is a configuration diagram showing a conventional power generation system.

### DESCRIPTION OF EMBODIMENTS

### <Findings based on study by present inventors>

According to the technique described in Patent Literature 1, high-temperature thermal energy of exhaust gas at about 500°C discharged from the internal combustion engine 301 is recovered in the absorption chiller-heater 304. Subsequently, the exhaust gas having a middle temperature at about 150°C is used as a heat source in the evaporator 306 in a Rankine cycle. Cooling water of the internal combustion engine 301 is supplied to the condenser 305 as the low-temperature heat source 3b at about 65°C. The temperature difference between a working fluid flowing into the turbine 308 of the Rankine cycle and that flowing out of the condenser 305 of the Rankine cycle cannot be regarded as sufficiently large. Therefore, the power generation system 300 leaves room for improvement in the efficiency of electricity generation by the Rankine cycle.

According to the technique described in Patent Literature 1, the exhaust gas at about 500°C from the internal combustion engine 301 is delivered to the absorption chiller-heater 304 to create chilled water and hot water using the thermal energy of the exhaust gas for use in air-conditioning. The present inventors, however, have found that the chilled water and hot water created in the absorption chiller-heater using the high-temperature thermal energy of the exhaust gas are often excessive relative to a required heat load. In such a case, the created chilled water and hot water cannot be used efficiently, which possibly results in inefficient use of the thermal energy of the exhaust gas. The present inventors have then found that using most of the thermal energy of the exhaust gas from the internal combustion engine for electricity generation facilitates efficient use of the thermal energy of the exhaust gas. A cogeneration system of the present disclosure has been invented based on the above findings of the present inventors.

A first aspect of the present disclosure provides a cogeneration system including:
an internal combustion engine;
a first power generator driven by the internal combustion engine;
a first coolant circuit including a cooler that cools the internal combustion engine with a first coolant;
a first heat exchanger including a part of the first coolant circuit to cool the first coolant with a second coolant;
a second coolant circuit including a flow path through which the second coolant flows and which is formed in the first heat exchanger;
a Rankine cycle power generation apparatus including a pump that pumps a working fluid, an evaporator that heats and evaporates the working fluid pumped by the pump with exhaust gas from the internal combustion engine, an expander driven by expansion of the working fluid evaporated in the evaporator, a second power generator coupled to and driven by the expander, and a condenser that cools and condenses the working fluid expanded in the expander with the first coolant or the second coolant; and
an exhaust gas supply path that delivers the exhaust gas discharged from the internal combustion engine to the evaporator without allowing the exhaust gas to exchange heat with a liquid, wherein
the condenser has a flow path through which the first coolant flows and which forms a part of the first coolant circuit or a flow path through which the second coolant flows and which forms a part of the second coolant circuit.

According to the first aspect, the high-temperature exhaust gas discharged from the internal combustion engine is delivered to the evaporator through the exhaust gas supply path without exchanging heat with a liquid. This allows the temperature of the working fluid flowing into the expander to be sufficiently high and makes it possible to maintain a large temperature difference between the working fluid flowing into the expander and that flowing out of the condenser. Consequently, a large temperature difference can be maintained between the working fluid on the high-temperature side and that on the low-temperature side of the Rankine cycle power generation apparatus, and thus the efficiency of electricity generation by the Rankine cycle power generation apparatus can be enhanced. As a result, the amount of electricity generated by the cogeneration system can be increased.

A second aspect of the present disclosure provides the cogeneration system as set forth in the first aspect, wherein the condenser has the flow path through which the first coolant flows and which forms a part of the first coolant circuit and is disposed downstream of the cooler and upstream of an inlet of the first heat exchanger for the first coolant in a flow direction of the first coolant. According to the power generation system 300 described in Patent Literature 1, the cooling water whose temperature has been increased by passage through the condenser 305 is used for cooling the internal combustion engine 301. Therefore, the cooling of the internal combustion engine is likely to be unstable. By contrast, according to the second aspect, the first coolant cooled by the second coolant in the first heat exchanger and having the lowest temperature in the first coolant circuit is supplied to the cooler cooling the internal combustion engine. This allows the temperature of the first coolant supplied to the cooler cooling the internal combustion engine to be maintained in a predetermined range and the internal combustion engine to operate under desired conditions. As a result, a decrease in the efficiency of electricity generation by the first power generator driven by the internal combustion engine or deterioration of components of the exhaust gas discharged from the internal combustion engine can be prevented.

A third aspect of the present disclosure provides the cogeneration system as set forth in the first aspect, wherein the condenser has the flow path through which the first coolant flows and which forms a part of the first coolant circuit, and the condenser and the cooler are disposed in parallel downstream of an outlet of the first heat exchanger for the first coolant in a flow direction of the first coolant. According to the third aspect, the first coolant having the lowest temperature in the first coolant circuit is supplied to each of the condenser and cooler. This enables to cool both the internal combustion engine and the working fluid of the Rankine cycle power generation apparatus with the low-temperature first coolant sufficiently, and thus both the internal combustion engine and Rankine cycle power generation apparatus can be stably operated under desired conditions.

A fourth aspect of the present disclosure provides the cogeneration system as set forth in any one of the first to third aspects, further including a third heat exchanger that cools the exhaust gas flowing out of the evaporator with the first coolant or the second coolant, wherein the third heat exchanger has a flow path through which the first coolant flows and which forms a part of the first coolant circuit or a flow path through which the second coolant flows and which forms a part of the second coolant circuit. According to the fourth aspect, the temperature of the exhaust gas flowing out of the evaporator can be relatively high and the working fluid having exchanged heat with the exhaust gas in the evaporator can be maintained at a higher temperature. Additionally, the heat of the exhaust gas flowing out of the evaporator is not wasted but can be sufficiently recovered in the third heat exchanger. Therefore, the further increase in the temperature of the working fluid on the high temperature side of the Rankine cycle power generation apparatus allows further enhancement of the efficiency of electricity generation by the Rankine cycle power generation apparatus and also allows use of the heat of the exhaust gas for, for example, production of hot water. Hence, the overall efficiency of the cogeneration system is less likely to decline.

A fifth aspect of the present disclosure provides the cogeneration system as set forth in the fourth aspect, wherein the condenser has the flow path through which the second coolant flows and which forms a part of the second coolant circuit, the third heat exchanger has the flow path through which the second coolant flows and which forms a part of the second coolant circuit, and the condenser, the first heat exchanger, and the third heat exchanger are disposed in order of the condenser, the first heat exchanger, and the third heat exchanger in a flow direction of the second coolant. According to the fifth aspect, a part of the first coolant circuit does not need to be formed in the condenser, and the first coolant circuit can be formed independently from the condenser. The internal combustion engine can be cooled by the first coolant circuit formed, as described above, independently from the condenser, and thus the state of the first coolant in the first coolant circuit is easily adjusted. Consequently, the internal combustion engine is likely to be operated under desired conditions, and a decrease in the efficiency of electricity generation by the first power generator driven by the internal combustion engine or deterioration of components of the exhaust gas discharged from the internal combustion engine can be prevented. Additionally, the second coolant having a lower temperature than the first coolant can be supplied to the condenser. This can lead to a decrease in the temperature of the working fluid on the low temperature side of the Rankine cycle power generation apparatus and therefore to further enhancement of the efficiency of electricity generation by the Rankine cycle power generation apparatus. Moreover, owing to the third heat exchanger, the second coolant having passed through the third heat exchanger can be maintained at a high temperature. Consequently, for example, when the second coolant having passed through the third heat exchanger and supplied by the cogeneration system is used as hot water, the hot water can have a high temperature.

A sixth aspect of the present disclosure provides the cogeneration system as set forth in any one of the first to fifth aspects, further including: an air-cooling circuit having an air-cooled heat radiator; and a switching valve disposed in the first coolant circuit or the second coolant circuit to switch between a state where the first coolant or the second coolant flowing out of the condenser flows only in the first coolant circuit or the second coolant circuit and a state where the first coolant or the second coolant flowing out of the condenser passes through the air-cooled heat radiator and returns to the condenser. According to the sixth aspect, the first coolant or second coolant cooling, in the condenser, the working fluid of the Rankine cycle power generation apparatus can be supplied to the air-cooling circuit using the switching valve. This enables to cool the working fluid of the Rankine cycle power generation apparatus close to the outside air temperature. Therefore, for example, when the amount of heat of the second coolant flowing in the second coolant circuit is excessive relative to a heat demand, such as during the intermediate seasons, the temperature of the working fluid on the low temperature side of the Rankine cycle power generation apparatus can be decreased. This can further enhance the efficiency of electricity generation by the Rankine cycle power generation apparatus, and thus can increase the amount of generated electricity while decreasing the amount of heat of the hot water supplied by the cogeneration system.

Hereinafter, embodiments of the present invention will be described with reference to the drawings. It should be noted that the following description shows examples of the cogeneration system of the present disclosure, and the present invention is not limited by these examples.

### <First embodiment>

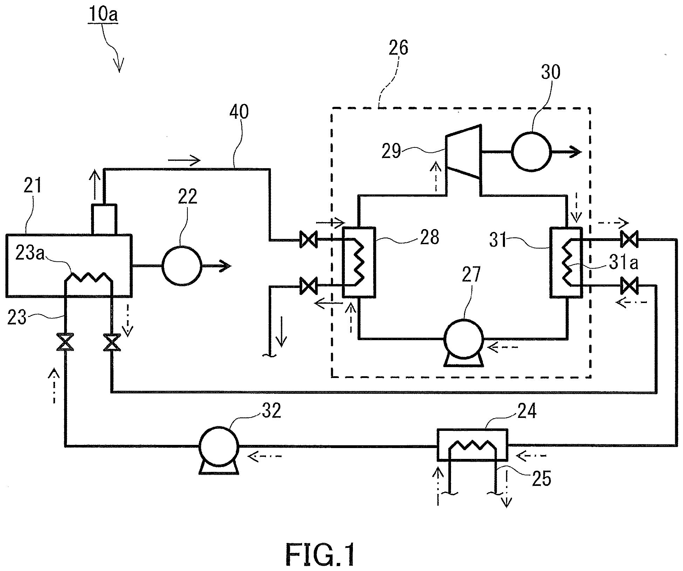

As shown in FIG. 1, a cogeneration system 10a according to a first embodiment includes an internal combustion engine 21, a first power generator 22, a first coolant circuit 23, a first heat exchanger 24, a second coolant circuit 25, a Rankine cycle power generation apparatus 26, and an exhaust gas supply path 40. The first power generator 22 is driven by the internal combustion engine 21. The first coolant circuit 23 includes a cooler 23a that cools the internal combustion engine 21 with a first coolant. The first heat exchanger 24 includes a part of the first coolant circuit 23. The first heat exchanger 24 cools the first coolant with a second coolant. The second coolant circuit 25 includes a flow path through which the second coolant flows and which is formed in the first heat exchanger 24. The Rankine cycle power generation apparatus 26 includes a pump 27, an evaporator 28, an expander 29, a second power generator 30, and a condenser 31. The pump 27 pumps the working fluid of the Rankine cycle. The evaporator 28 heats and evaporates the working fluid pumped by the pump 27 with exhaust gas from the internal combustion engine 21. The expander 29 is driven by expansion of the working fluid evaporated in the evaporator 28. The second power generator 30 is coupled to and driven by the expander 29. The condenser 31 cools and condenses the working fluid expanded in the expander 29 with the first coolant. The condenser 31 has a flow path 31a through which the first coolant flows and which forms a part of the first coolant circuit 23. The condenser 31 may cool and condense the working fluid expanded in the expander 29 with the second coolant. In this case, the condenser 31 has a flow path 31b through which the second coolant flows and which forms a part of the second coolant circuit 25.

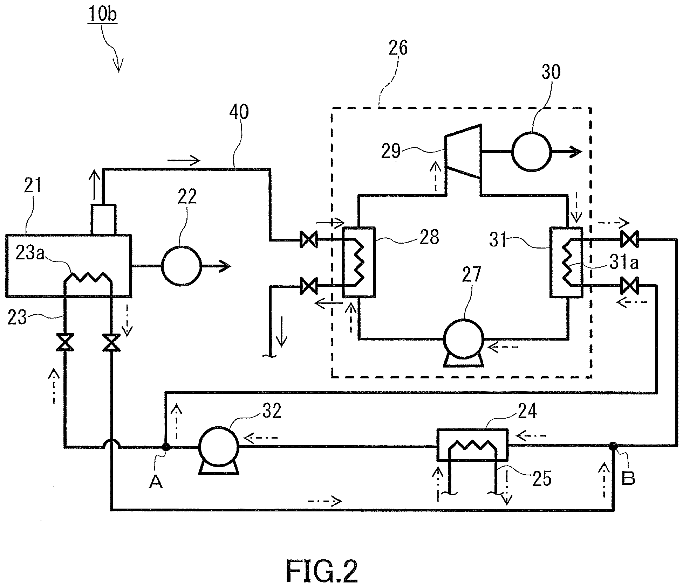

In FIG. 1, the solid arrows indicate a flow of the exhaust gas, the dashed arrows indicate a flow of the working fluid of the Rankine cycle, the dash-dot arrows indicate a flow of the first coolant, and the dash-dot-dot arrows indicate a flow of the second coolant. The same applies to FIG. 2 to FIG. 5.

The internal combustion engine 21 is, for example, but not particularly limited to, a gas engine, diesel engine, or gasoline engine. Combustion of a fuel in the internal combustion engine 21 produces motive power, which drives the first power generator 22. The exhaust gas produced by the combustion of the fuel in the internal combustion engine 21 is discharged from the internal combustion engine 21 and supplied to the evaporator 28 through the exhaust gas supply path 40. The exhaust gas does not exchange heat with any liquid while passing through the exhaust gas supply path 40. Thus, the exhaust gas having a high temperature (for example, 200°C or higher) is supplied to the evaporator 28 through the exhaust gas supply path 40. The temperature of the exhaust gas supplied to the evaporator 28 can be, for example, 300°C or higher, even 400°C or higher, or, in some cases, 500°C or higher. The temperature of the exhaust gas flowing out of the evaporator 28 is, for example, 120°C to 180°C. The exhaust gas flowing out of the evaporator 28 is emitted, for example, into the air.

The cooler 23a is not particularly limited as long as it can cool the internal combustion engine 21. The cooler 23a, for example, includes a jacket temporarily storing the first coolant for cooling the internal combustion engine 21. The first coolant is, for example, but not particularly limited to, water.

The first heat exchanger 24 has a flow path through which the first coolant flows and which forms a part of the first coolant circuit 23 and the flow path through which the second coolant flows and which forms a part of the second coolant circuit 25, and allows the first and second coolants to exchange heat. The second coolant is, for example, but not particularly limited to, water. The temperature of the second coolant supplied to the first heat exchanger 24 is lower than that of the first coolant supplied to the first heat exchanger 24. Therefore, the first heat exchanger 24 cools the first coolant with the second coolant. The temperature of the first coolant supplied to the first heat exchanger 24 is, for example, 80°C, and the temperature of the second coolant supplied to the first heat exchanger 24 is, for example, 60°C. The temperature of the first coolant flowing out of the first heat exchanger 24 is, for example, 65°C. The temperature of the second coolant flowing out of the first heat exchanger 24 is, for example, 75°C. The second coolant flowing out of the first heat exchanger 24 may be used in applications such as hot-water supply or heating. The first heat exchanger 24 is not particularly limited and is embodied as, for example, a shell-and-tube heat exchanger or plate heat exchanger.

As shown in FIG. 1, for example, the pump 32 is disposed between an outlet of the first heat exchanger 24 for the first coolant and inlet of the cooler 23a in the first coolant circuit 23, and the first coolant is circulated in the first coolant circuit 23 by the action of the pump 32. The condenser 31, for example, has the flow path 31a through which the first coolant flows and which forms a part of the first coolant circuit 23, and is disposed downstream of the cooler 23a and upstream of an inlet of the first heat exchanger 24 for the first coolant in a flow direction of the first coolant. Therefore, the first coolant having been cooled by the second coolant in the first heat exchanger 24 and having the lowest temperature in the first coolant circuit 23 is supplied to the cooler 23a cooling the internal combustion engine 21. This allows the temperature of the first coolant supplied to the cooler 23a cooling the internal combustion engine 21 to be maintained in a predetermined range and the internal combustion engine 21 to operate under desired conditions. As a result, a decrease in the efficiency of electricity generation by the first power generator 22 driven by the internal combustion engine 21 or deterioration of components of the exhaust gas discharged from the internal combustion engine 21 can be prevented.

In the cooler 23a, the first coolant is heated by the heat produced in the internal combustion engine 21. The temperature of the first coolant flowing out of the cooler 23a is, for example, 75°C. The first coolant having passed through the cooler 23a is supplied to the condenser 31 and flows through the flow path 31a. When the first coolant passes through the flow path 31a, the temperature of the first coolant increases due to heat exchange between the first coolant and working fluid of the Rankine cycle. The first coolant having passed through the flow path 31a is supplied to the first heat exchanger 24.

In the Rankine cycle power generation apparatus 26, the working fluid pressurized by the action of the pump 27 is supplied to the evaporator 28. In the evaporator 28, the working fluid is heated and evaporated by heat exchange with the high-temperature exhaust gas. The evaporator 28 is embodied as, for example, a fin tube heat exchanger.

The working fluid evaporated in the evaporator 28 flows into the expander 29 and expands to produce motive power in the expander 29. This motive power is transmitted to the second power generator 30 coupled to the expander 29 and drives the second power generator 30 to generate electricity. The expander 29 is, for example, a positive-displacement fluid machinery of the piston or scroll type or turbo fluid machinery of the axial-flow or centrifugal type.

The working fluid expanded in the expander 29 is supplied to the condenser 31, where the working fluid is cooled and condensed by heat exchange with the first coolant. The condenser 31 is embodied as, for example, a shell-and-tube heat exchanger. The condensed working fluid is pressurized by the action of the pump 27 and supplied to the evaporator 28.

Since the exhaust gas supplied to the evaporator 28 is high-temperature gas not having exchanged heat with any liquid after discharged from the internal combustion engine 21, the temperature of the working fluid flowing into the expander 29 is high. Thus, although the temperature of the first coolant supplied to the condenser 31 has been increased to some degree by passage through the cooler 23a, a large temperature difference is maintained between the working fluid flowing into the expander 29 and that flowing out of the condenser 31. That is, a large temperature difference is maintained between the working fluid on the high-temperature side and that on the low-temperature side of the Rankine cycle. Therefore, the Rankine cycle power generation apparatus 26 has a high efficiency of electricity generation and the amount of electricity generated by the cogeneration system 10a is large.

The working fluid of the Rankine cycle power generation apparatus 26 is desirably a fluid not thermally decomposed at a temperature of the exhaust gas supplied to the evaporator 28. The working fluid of the Rankine cycle power generation apparatus 26 is, for example, HFC-245fa or HFC-365mfc.

The cogeneration system 10a can be modified in various respects. For example, the condenser 31 may have the flow path 31b through which the second coolant flows and which forms a part of the second coolant circuit 25 in place of the flow path 31a. In this case, the condenser 31 is disposed, for example, upstream of an inlet of the first heat exchanger 24 for the second coolant in a flow direction of the second coolant. The low-temperature second coolant is thereby supplied to the condenser 31, which can decrease the temperature of the working fluid flowing out of the condenser 31 and increase the temperature difference between the working fluid flowing into the expander 29 and that flowing out of the condenser 31.

### <Second embodiment>

The cogeneration system 10b according to a second embodiment is configured in the same manner as the cogeneration system 10a according to the first embodiment, unless otherwise described. The components of the cogeneration system 10b that are the same as or correspond to those of the cogeneration system 10a are denoted by the same reference characters, and detailed descriptions of such components are omitted. The description given for the cogeneration system 10a can apply to the cogeneration system 10b, unless there is technical inconsistency.

As shown in FIG. 2, the condenser 31 of the cogeneration system 10b has the flow path 31a through which the first coolant flows and which forms a part of the first coolant circuit 23. In the cogeneration system 10b, the condenser 31 and cooler 23a are disposed in parallel downstream of the outlet of the first heat exchanger 24 for the first coolant in the flow direction of the first coolant. For example, the first coolant circuit 23 has a portion extending, in the flow direction of the first coolant, from a branch point A located downstream of an outlet of the pump 32 to a junction point B located upstream of the inlet of the first heat exchanger 24 via the cooler 23a. The first coolant circuit 23 further has a portion extending from the branch point A to the junction point B via the condenser 31. Consequently, the first coolant having the lowest temperature in the first coolant circuit 23 is supplied to each of the condenser 31 and cooler 23a. This enables to cool both the internal combustion engine 21 and the working fluid of the Rankine cycle power generation apparatus 26 with the low-temperature first coolant sufficiently, and thus both the internal combustion engine and Rankine cycle power generation apparatus 26 can be stably operated under desired conditions.

In the first coolant circuit 23 of the cogeneration system 10b, a flow rate regulator capable of regulating the flow rate of the first coolant supplied to the cooler 23a and that of the first coolant supplied to the flow path 31a may be disposed. The flow rate regulator is, for example, an electric three-way valve disposed at the branch point A or pair of electric valves respectively disposed between the branch point A and the inlet of the cooler 23a and between the branch point A and an inlet of the flow path 31a in the first coolant circuit 23.

### <Third embodiment>

The cogeneration system 10c according to a third embodiment is configured in the same manner as the cogeneration system 10a according to the first embodiment, unless otherwise described. The components of the cogeneration system 10c that are the same as or correspond to those of the cogeneration system 10a are denoted by the same reference characters, and detailed descriptions of such components are omitted. The descriptions given for the cogeneration systems 10a and 10b can apply to the cogeneration system 10c, unless there is technical inconsistency.

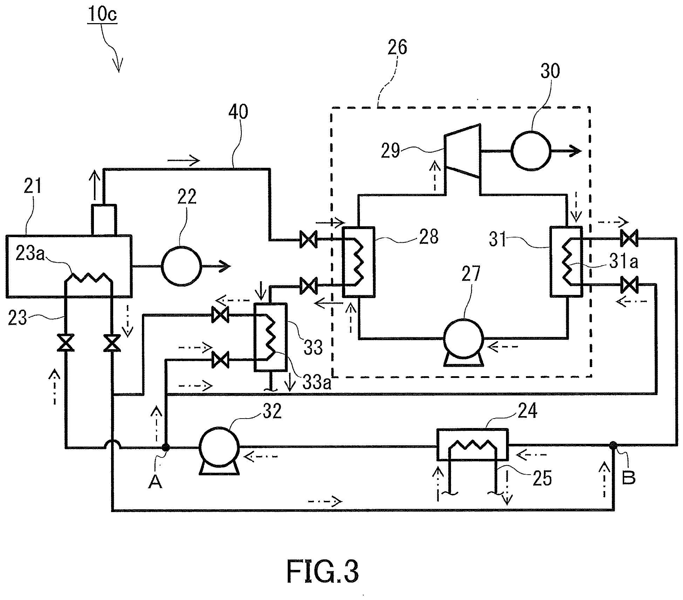

As shown in FIG. 3, the cogeneration system 10c further includes a third heat exchanger 33. The third heat exchanger 33 cools the exhaust gas flowing out of the evaporator 28 with the first coolant. For example, the third heat exchanger 33 has a flow path 33a through which the first coolant flows and which forms a part of the first coolant circuit 23. The cogeneration system 10c may be modified so that the third heat exchanger 33 will cool the exhaust gas flowing out of the evaporator 28 with the second coolant. In this case, the third heat exchanger 33 has a flow path 33b through which the second coolant flows and which forms a part of the second coolant circuit 25. The third heat exchanger 33 is embodied as, for example, a fin tube heat exchanger.

As shown in FIG. 3, for example, the condenser 31, cooler 23a, and third heat exchanger 33 are disposed in parallel downstream of the outlet of the first heat exchanger 24 for the first coolant in the flow direction of the first coolant. This allows the first coolant having the lowest temperature in the first coolant circuit 23 to be supplied to each of the condenser 31, cooler 23a, and third heat exchanger 33.

The third heat exchanger 33 can make the temperature of the exhaust gas flowing out of the evaporator 28 relatively high. In this case, the temperature of the exhaust gas flowing out of the evaporator 28 is, for example, 150 to 200°C.

This makes it possible to maintain the working fluid having exchanged heat with the exhaust gas in the evaporator 28 at a higher temperature. Additionally, the heat of the exhaust gas flowing out of the evaporator 28 is not wasted but can be sufficiently recovered in the third heat exchanger 33. Therefore, the further increase in the temperature of the working fluid on the high temperature side of the Rankine cycle power generation apparatus 26 allows further enhancement of the efficiency of electricity generation by the Rankine cycle power generation apparatus 26 and also allows use of the heat of the exhaust gas for, for example, production of hot water. As a result, the cogeneration system 10c achieves a high overall efficiency.

### <Fourth embodiment>

The cogeneration system 10d according to a fourth embodiment is configured in the same manner as the cogeneration system 10c according to the third embodiment, unless otherwise described. The components of the cogeneration system 10d that are the same as or correspond to those of the cogeneration system 10c are denoted by the same reference characters, and detailed descriptions of such components are omitted. The descriptions given for the cogeneration systems 10a to 10c can apply to the cogeneration system 10d, unless there is technical inconsistency.

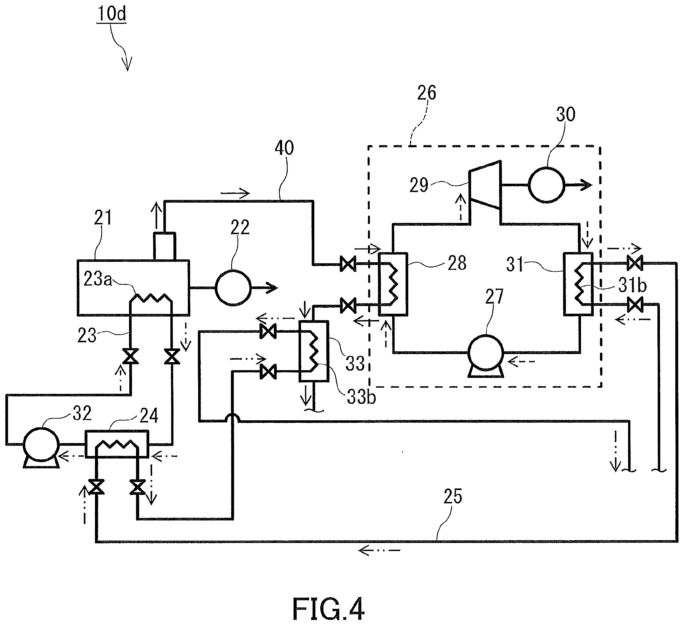

As shown in FIG. 4, the condenser 31 of the cogeneration system 10d has the flow path 31b through which the second coolant flows and which forms a part of the second coolant circuit 25. The third heat exchanger 33 has the flow path 33b through which the second coolant flows and which forms a part of the second coolant circuit 25. The condenser 31, first heat exchanger 24, and third heat exchanger 33 are disposed in order of the condenser 31, first heat exchanger 24, and third heat exchanger 33 in the flow direction of the second coolant.

In the cogeneration system 10d, a part of the first coolant circuit 23 does not need to be formed in the condenser 31. The first coolant circuit 23 can be formed independently from the condenser 31. The internal combustion engine 21 can be cooled by the first coolant circuit 23 formed independently from the condenser 31, and thus the state of the first coolant in the first coolant circuit 23 is easily adjusted. Consequently, the internal combustion engine 21 is likely to be operated under desired conditions and a decrease in the efficiency of electricity generation by the first power generator 22 driven by the internal combustion engine 21 or deterioration of components of the exhaust gas discharged from the internal combustion engine 21 can be prevented. Additionally, the second coolant having a lower temperature than the first coolant can be supplied to the condenser 31. This can lead to a decrease in the temperature of the working fluid on the low temperature side of the Rankine cycle power generation apparatus 26 and therefore to further enhancement of the efficiency of electricity generation by the Rankine cycle power generation apparatus 26. Moreover, owing to the third heat exchanger 33, the second coolant having passed through the third heat exchanger 33 can be maintained at a high temperature. Consequently, for example, when the second coolant having passed through the third heat exchanger 33 and supplied by the cogeneration system 10d is used as hot water, the hot water can have a high temperature.

### <Fifth embodiment>

The cogeneration system 10e according to a fifth embodiment is configured in the same manner as the cogeneration system 10a according to the first embodiment, unless otherwise described. The components of the cogeneration system 10e that are the same as or correspond to those of the cogeneration system 10a are denoted by the same reference characters, and detailed descriptions of such components are omitted. The descriptions given for the cogeneration systems 10a to 10d can apply to the cogeneration system 10e, unless there is technical inconsistency.

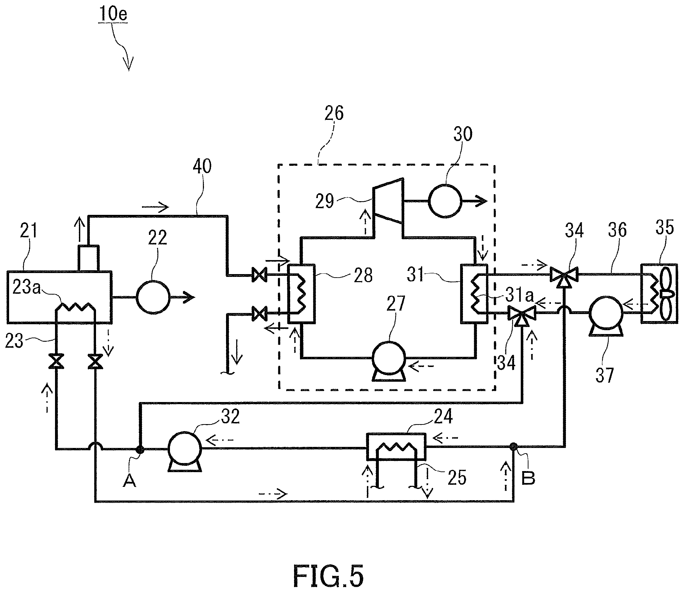

As shown in FIG. 5, the cogeneration system 10e further includes an air-cooling circuit 36 and switching valve 34. The air-cooling circuit 36 has an air-cooled heat radiator 35. The heat radiator 35 is embodied as, for example, a fin tube heat exchanger and has a fan. The switching valve 34 is disposed, for example, in the first coolant circuit 23 to switch between a state where the first coolant flowing out of the condenser 31 flows only in the first coolant circuit 23 and a state where the first coolant flowing out of the condenser 31 passes through the heat radiator 35 and returns to the condenser 31. In this case, the first coolant cooling, in the condenser 31, the working fluid of the Rankine cycle power generation apparatus 26 can be supplied to the air-cooling circuit 36. This enables to cool the working fluid of the Rankine cycle power generation apparatus 26 close to the outside air temperature. Therefore, when the amount of heat of the second coolant flowing in the second coolant circuit 25 is excessive relative to a heat demand, such as during the intermediate seasons, the temperature of the working fluid on the low temperature side of the Rankine cycle power generation apparatus 26 can be decreased. This can further enhance the efficiency of electricity generation by the Rankine cycle power generation apparatus 26, and thus can increase the amount of generated electricity while decreasing the amount of heat of the hot water supplied by the cogeneration system 10e.

As shown in FIG. 5, the switching valve 34 includes, for example, a pair of three-way valves respectively disposed upstream of an inlet of the condenser 31 and downstream of an outlet of the condenser 31 in the flow direction of the first coolant. A pump 37 is disposed in the air-cooling circuit 36. By the action of the pump 37, the first coolant flowing out of the condenser 31 can be delivered to the heat radiator 35 and then brought back to the condenser 31. The three-way valve disposed downstream of the outlet of the condenser 31 is connected to an inlet of the air-cooling circuit 36, and the three-way valve disposed upstream of the inlet of the condenser 31 is connected to an outlet of the air-cooling circuit 36.

The cogeneration system 10e may be modified so that the switching valve 34 will be disposed in the second coolant circuit 25. In this case, the switching valve 34 is operated to switch between a state where the second coolant flowing out of the condenser 31 flows only in the second coolant circuit 25 and a state where the second coolant flowing out of the condenser 31 passes through the heat radiator 35 and returns to the condenser 31.

## Claims

1. A cogeneration system comprising:
an internal combustion engine;
a first power generator driven by the internal combustion engine;
a first coolant circuit comprising a cooler that cools the internal combustion engine with a first coolant;
a first heat exchanger comprising a part of the first coolant circuit to cool the first coolant with a second coolant;
a second coolant circuit comprising a flow path through which the second coolant flows and which is formed in the first heat exchanger;
a Rankine cycle power generation apparatus comprising a pump that pumps a working fluid, an evaporator that heats and evaporates the working fluid pumped by the pump with exhaust gas from the internal combustion engine, an expander driven by expansion of the working fluid evaporated in the evaporator, a second power generator coupled to and driven by the expander, and a condenser that cools and condenses the working fluid expanded in the expander with the first coolant or the second coolant; and
an exhaust gas supply path that delivers the exhaust gas discharged from the internal combustion engine to the evaporator without allowing the exhaust gas to exchange heat with a liquid, wherein
the condenser has a flow path through which the first coolant flows and which forms a part of the first coolant circuit or a flow path through which the second coolant flows and which forms a part of the second coolant circuit.

2. The cogeneration system according to claim 1, wherein the condenser has the flow path through which the first coolant flows and which forms a part of the first coolant circuit and is disposed downstream of the cooler and upstream of an inlet of the first heat exchanger for the first coolant in a flow direction of the first coolant.

3. The cogeneration system according to claim 1, wherein
the condenser has the flow path through which the first coolant flows and which forms a part of the first coolant circuit, and
the condenser and the cooler are disposed in parallel downstream of an outlet of the first heat exchanger for the first coolant in a flow direction of the first coolant.

4. The cogeneration system according to any one of claims 1 to 3, further comprising a third heat exchanger that cools the exhaust gas flowing out of the evaporator with the first coolant or the second coolant, wherein
the third heat exchanger has a flow path through which the first coolant flows and which forms a part of the first coolant circuit or a flow path through which the second coolant flows and which forms a part of the second coolant circuit.

5. The cogeneration system according to claim 4, wherein
the condenser has the flow path through which the second coolant flows and which forms a part of the second coolant circuit,
the third heat exchanger has the flow path through which the second coolant flows and which forms a part of the second coolant circuit, and
the condenser, the first heat exchanger, and the third heat exchanger are disposed in order of the condenser, the first heat exchanger, and the third heat exchanger in a flow direction of the second coolant.

6. The cogeneration system according to any one of claims 1 to 5, further comprising:
an air-cooling circuit having an air-cooled heat radiator; and
a switching valve disposed in the first coolant circuit or the second coolant circuit to switch between a state where the first coolant or the second coolant flowing out of the condenser flows only in the first coolant circuit or the second coolant circuit and a state where the first coolant or the second coolant flowing out of the condenser passes through the air-cooled heat radiator and returns to the condenser.
